# EUROPÄISCHE PATENTSCHRIFT

(11) **EP 1 680 297 B1**
(45) Veröffentlichungstag und Bekanntmachung des Hinweises auf die Patenterteilung: **06.05.2009**
(21) Anmeldenummer: 04789947.1
(22) Anmeldetag: 08.10.2004
(51) Int. Cl.: B60J 7/12

(54) **SPRIEGEL FÜR EIN CABRIOLET-FAHRZEUG**
BOW FOR A CONVERTIBLE VEHICLE
ARCEAU POUR VEHICULE CABRIOLET

(30) Priorität: 24.10.2003 DE 10349822
(43) Veröffentlichungstag der Anmeldung: 19.07.2006
(73) Patentinhaber: Wilhelm Karmann GmbH, 49084 Osnabrück (DE)
(72) Erfinder: LIEDMEYER, Petra, 49509 Recke (DE); WESSELMANN, Mark, 49509 Recke (DE)
(86) Internationale Anmeldenummer: PCT/DE2004/002238
(87) Internationale Veröffentlichungsnummer: WO 2005/039908

(56) Entgegenhaltungen:
- EP-A- 0 806 313
- WO-A-01/85478
- DE-A1- 3 127 524
- DE-A1- 19 707 019
- DE-C1- 19 962 377
- GB-A- 396 471

## Beschreibung

Die Erfindung betrifft ein Cabriolet-Fahrzeug nach dem Oberbegriff des Anspruchs 1 sowie ein bewegliches Fahrzeugdach nach dem Oberbegriff des Anspruchs 10.

Es ist bekannt, bei Cabriolet-Fahrzeugen mit flexiblen Dachbezügen, etwa Textil- oder Kunststoffbezügen, diese über im wesentlichen quer zum Fahrzeug verlaufende Spriegel zu spannen. Solch ein Spriegel ist aus dem Dokument WO 01/85 478 bekannt. Dabei gibt es Fahrzeuge mit mehrteiligen Spriegeln, die etwa einen Mittelbereich aus einem ersten Material und seitliche Beschläge aus abweichenden, etwa biegefesteren Materialien aufweisen, mit denen die Spriegel an seitlichen Rahmenteilen eines Dachgestells gehalten sind.

Wenn dabei Beschläge und Mittelteil miteinander verschraubt sind, ragen die Schraubenköpfe relativ weit in den Innenraum und bilden somit insbesondere bei flachen Sportwagen mit geringer Kopffreiheit eine Stör- und Gefahrenquelle für die Insassen aus oder erfordern das Einziehen eines sogenannten Innenhimmels, der die Schraubköpfe verdeckt, jedoch auch selbst an ihnen scheuern und dabei verschleißen kann. Zudem ist es gerade bei dieser Fahrzeugart wünschenswert, die Spriegel möglichst flach auszuführen, um die Kopffreiheit der Insassen so wenig wie möglich einzuschränken. Das erschwert jedoch den Eingriff von Schrauben, da der Gewindeweg im flachen Bauteil sehr klein wird.

Der Erfindung liegt das Problem zugrunde, bei einem Cabriolet-Fahrzeug mit einem zumindest teilweise flexiblen, von einem oder mehreren Spriegeln untergriffenen Dachbezug die Spriegel zu optimieren.

Die Erfindung löst dieses Problem durch ein Cabriolet-Fahrzeug mit den Merkmalen des Anspruchs 1 sowie durch ein bewegliches Fahrzeugdach mit den Merkmalen des Anspruchs 10. Hinsichtlich weiterer vorteilhafter Ausgestaltungen der Erfindung wird auf die abhängigen Ansprüche 2 bis 9 verwiesen.

In erfindungsgemäßer Ausbildung ragen die Befestigungsmittel, etwa Schrauben, Bolzen, Niete oder dergleichen, nicht über den jeweiligen Spriegel nach unten hinaus. Die Kopffreiheit ist dadurch erhöht, die Verletzungsgefahr vermindert.

Die gewünschte flache Form des Spriegels ist für die erfindungsgemäße Ausbildung sogar noch vorteilhaft: Insbesondere wenn der Mittelteil des Spriegels im Querschnitt eine im wesentlichen elliptische Form mit einer zumindest nahezu parallel zur Bezugerstreckung im Bereich des jeweiligen Spriegels erstreckten großen Halbachse aufweist, ergibt sich in dieser Ebene parallel zum Bezug die Möglichkeit, lange Befestigungsmittel zu verwenden, ohne daß diese die äußere Umrißgestalt des Spriegels überragen.

Wenn vorteilhaft die Verbindungsmittel durch einen Haltekanal einführbar sind und in montierter Stellung von einer eingezogenen Bezugbefestigung übergriffen sind, sind sie optisch völlig verdeckt, unzugänglich gegen unbeabsichtigtes Lösen und frei von vorstehenden Kanten oder Ecken. Ein Innenhimmel ist verzichtbar.

Durch den Haltekanal ist es weiterhin ermöglicht, daß die Bezugbefestigung von den Seiten her in den Mittelbereich des Spriegels eingezogen und demontiert werden kann. Mit entsprechenden Einführbereichen an zumindest einem der Beschläge ist dies vorteilhaft auch bei zusammengesetztem Spriegel möglich, was auch den Bezugaustausch vereinfacht.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: ein erfindungsgemäßes Cabriolet-Fahrzeug in schematischer, unten und vorne abgebrochener perspektivischer Ansicht bei vollständig geschlossenem Dach, das hier außerhalb einer Heckscheibe über seine ganze Erstreckung einen flexiblen Bezug aufweist,
- Fig. 2: einen einzelnen Spriegel in Ansicht von schräg hinten,
- Fig. 3: das Detail III in Fig. 2,
- Fig. 4: einen Schnitt entlang der Linie IV-IV in Fig. 3 mit zusätzlich eingezeichnetem Bezug und seiner Befestigung,
- Fig. 5: einen Schnitt entlang der Linie V-V in Fig. 3 mit zusätzlich eingezeichnetem Bezug und seiner Befestigung.

Das dargestellte erfindungsgemäße Cabriolet-Fahrzeug 1 kann sowohl ein Zweisitzer als auch ein Cabriolet-Fahrzeug mit einem größeren Innenraum und etwa zwei Sitzreihen hintereinander sein.

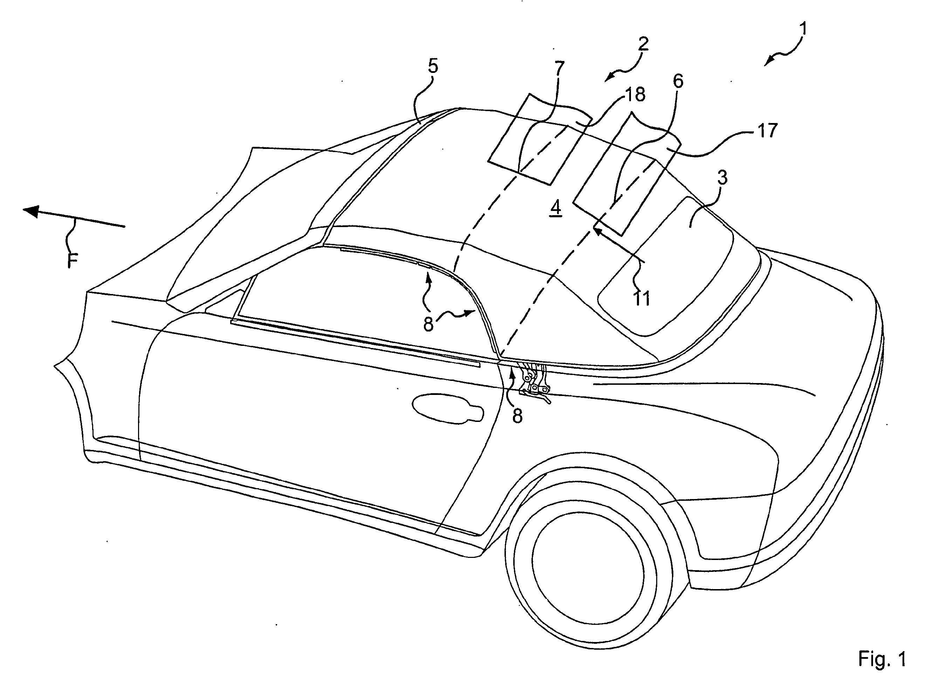

Es umfaßt ein bewegliches Dach, das insgesamt mit 2 bezeichnet ist und hier außerhalb einer Heckscheibe 3 über seine ganze Erstreckung einen flexiblen Dachbezug 4 aufweist, was nicht zwingend ist. Auch wäre es möglich, daß nur ein Teil des Daches 2 flexibel ist und ein anderer durch ein oder mehrere starre(s) Plattenteil(e) gebildet ist. Das Dach 2 ist im geschlossenen Zustand (Fig. 1) an einem Windschutz-scheibenrahmen 5 verriegelt.

Der Dachbezug 4 ist, um seine Form zu halten, an einer oder häufig mehreren Stellen von einem oder mehreren quer zur Fahrtrichtung F erstreckten Spriegeln 6, 7 untergriffen, die ihrerseits starr oder schwenkbar an seitlichen Rahmenteilen 8 des Daches 2 festgelegt sind.

Hierzu sind die Spriegel 6, 7 jeweils in einen Mittelbereich 9 aus einem ersten Material, zum Beispiel als Aluminium-Strangpreßprofil, und seitliche Beschläge 10 aus einem anderen Material, zum Beispiel Aluminium-Sandguß, geteilt. Die Beschläge 10 halten dabei den Spriegel 6, 7 an den Rahmenteilen 8.

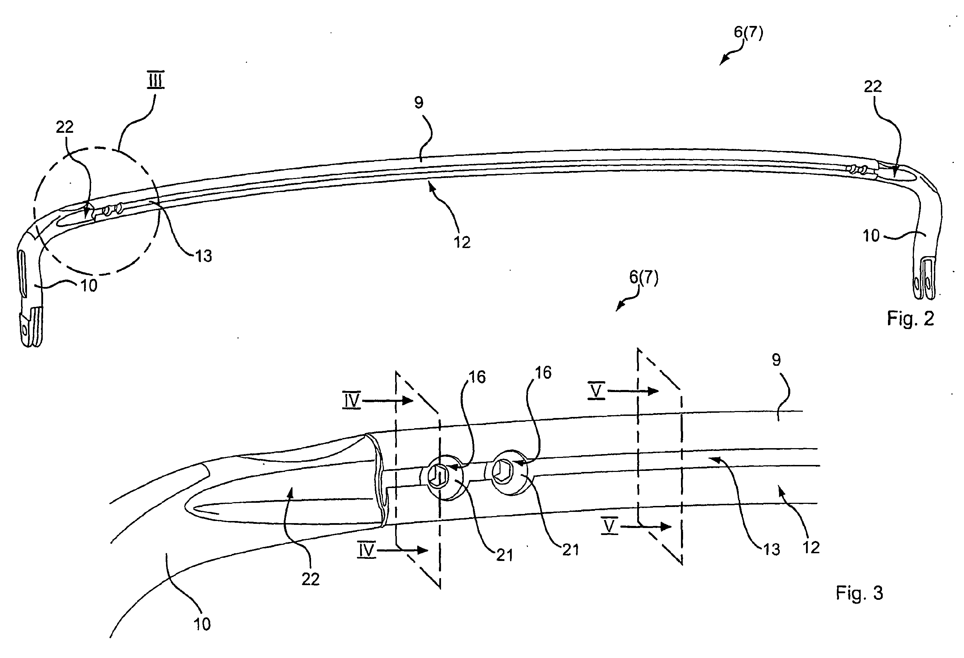

Beispielhaft sind zwei Spriegel 6, 7 in einer möglichen Lage in Figur 1 gestrichelt angedeutet. Die in Figur 2 gezeigte Einzelteilansicht eines Spriegels 6 ist ungefähr aus Richtung des Pfeils 11 in Figur 1 gesehen, also im wesentlichen von hinten in Fahrtrichtung F.

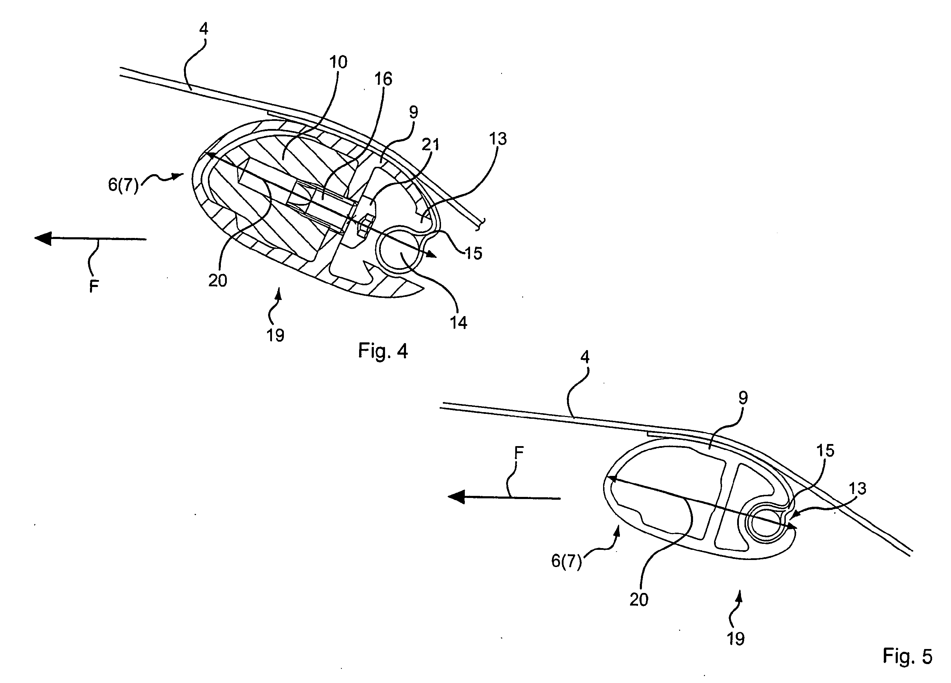

Die Spriegel 6, 7 weisen auf ihrer Rückseite 12, die nicht exakt entgegen der Fahrtrichtung F stehen muß, sondern auch aufgrund einer Schrägstellung des Spriegels 6, 7 gegen die Horizontale geneigt sein kann, wie insbesondere an dem Spriegel 6 zu erkennen ist, einen durchgehenden Haltekanal 13 auf. Dieser ist zur Aufnahme eines Keders 14 oder einer ähnlichen Verdickung einer Bezugbefestigung 15, hier einer Fahne, vorgesehen und im Querschnitt etwa C-förmig ausgebildet (Fig. 5).

Nahe den seitlichen Randbereichen ist die C-Form erweitert (Fig. 4), so daß dort Befestigungsmittel 16 quer zur Erstreckungsrichtung des Haltekanals 13 eingeführt werden können. Im hier gezeichneten Ausführungsbeispiel sind die Befestigungsmittel 16 durch pro Fahrzeugseite jeweils zwei Schrauben gebildet. Diese durchgreifen den Mittelteil 9 und greifen weiter in die hier formschlüssig im Mittelteil 9 aufgenommenen Enden des Beschlags 10 ein. Die Schrauben 16 können selbstfurchend sein. Eine weitere Sicherung von Mittelteil 9 und Beschlägen 10 aneinander ist nicht erforderlich.

Die Schrauben 16 liegen in Verbindungsstellung zumindest nahezu parallel zu einer Erstreckungsebene 17 bzw. 18 des Bezugs 4 im Bereich des jeweiligen Spriegels 6, 7 und stehen somit über den am weitesten in den Insassenraum hineinragenden Bereich 19 des Spriegels 6, 7 nicht vor.

Die Spriegel 6, 7 weisen eine im Querschnitt elliptische oder ähnliche flach erstreckte Gestalt auf (auch eine nahezu rechteckige oder trapezförmige Umrißgestalt kommt beispielsweise in Betracht), wobei sich die große Halbachse 20 der Ellipse nahezu oder vollständig parallel zur Ebene 17, 18 des Bezugs 4 im Bereich des jeweiligen Spriegels 6, 7 erstreckt. Die Befestigungsmittel 16 können dann in Richtung der großen Halbachse 20 des Spriegels 6, 7 eingebracht werden (Fig. 4), wodurch ein hinreichend langer Halt für die Befestigungsmittel und etwa ihre Gewinde zur Verfügung steht, ohne daß die Befestigungsmittel die Umrißgestalt des jeweiligen Spriegels 6, 7 überragen müßten. Auch die Köpfe 21 der Schrauben 16 können, wie in Fig. 4 sichtbar list, so weit eingeführt werden, daß sie vollständig innerhalb des Spriegels 6, 7 gehalten und hier sogar noch vom Keder 14 und der Fahne 15 verdeckt und unzugänglich sind.

In Anpassung an die Umrißgestalt des Mittelteils 9 sind auch die Beschläge 10 im Querschnitt flach erstreckt und ragen daher nur wenig in den Innenraum, wodurch auch hier die Kopffreiheit nach oben und zur Seite hin maximiert ist.

Die Bezugbefestigung 15 wird mit dem vorstehenden verdickten Keder 14 nach Zusammenbau der Spriegel 6, 7 über einen an zumindest einem der Beschläge 10 (hier an beiden gezeichnet) angeordneten Einführbereich 22 von der Seite her in den Haltekanal 13 eingezogen. Die ausgenommenen Einführbereiche 22 erweitern zur Fahrzeuglängsmittelebene hin und erleichtern somit das Einführen der Bezugbefestigung 15. Der eingezogene Keder 14 ist dann in dem C-förmigen Kanal 13 sicher gegen ein Herausziehen gehalten (Fig. 5).

An dem dem Keder 14 gegenüberliegenden Ende ist die Fahne 15 mit dem äußeren Bezug 4 fest verbunden, zum Beispiel verschweißt oder verklebt. Ein Innenhimmel kann zusätzlich montiert werden (nicht gezeichnet), ist jedoch zur Abdeckung irgendwelcher Befestigungsmittel 16 nicht erforderlich.

Die Erfindung ist sowohl bei Fahrzeugen mit manuell zu bewegenden Dächern auch bei voll- oder teilautomatischer Beweglichkeit des Daches 2 anwendbar.

## Patentansprüche

1. Cabriolet-Fahrzeug (1) mit einem Dach (2), das zumindest bereichsweise einen flexiblen Dachbezug (4) aufweist, der von einem oder mehreren quer zur Fahrtrichtung (F) liegenden Spriegel(n) (6;7) untergriffen ist, wobei zumindest ein Spriegel (6;7) mehrteilig ausgebildet ist und einen mit seitlichen Beschlägen (10) verbundenen Mittelbereich (9) umfaßt,
**dadurch gekennzeichnet,**
**daß** zur Verbindung des Mittelteils (9) und der Beschläge (10) Befestigungsmittel (16) vorgesehen sind, die bei geschlossenem Dach (2) zumindest nahezu parallel zur Erstreckungsebene (17;18) des äußeren Dachbezuges (4) im Bereich des jeweiligen Spriegels (6;7) liegen.

2. Cabriolet-Fahrzeug (1) nach Anspruch 1
**dadurch gekennzeichnet,**
**daß** die Beschläge (10) formschlüssig in den Mittelteil (9) eingreifen und die Befestigungsmittel (16) beide Teile (9;10) durchgreifen.

3. Cabriolet-Fahrzeug (1) nach einem der Ansprüche 1 oder 2,
**dadurch gekennzeichnet,**
**daß** der Mittelteil (9) einen seinem Verlauf folgenden Haltekanal (13) für einen verdickten Keder (14) oder dergleichen Randbereich einer Bezugbefestigung (15) aufweist.

4. Cabriolet-Fahrzeug (1) nach Anspruch 3,
**dadurch gekennzeichnet,**
**daß** die Befestigungsmittel (16) durch den Haltekanal (13) einführbar und in montierter Stellung von der Bezugbefestigung (15) verdeckt sind.

5. Cabriolet-Fahrzeug (1) nach Anspruch 4,
**dadurch gekennzeichnet,**
**daß** zumindest einer der Beschläge (10) einen ausgenommenen Einführungsbereich (22) zum Haltekanal (13) aufweist.

6. Cabriolet-Fahrzeug nach Anspruch 5,
**dadurch gekennzeichnet,**
**daß** sich der Einführungsbereich (22) zur Fahrzeugmitte hin erweitert.

7. Cabriolet-Fahrzeug nach einem der Ansprüche 3 bis 6,
**dadurch gekennzeichnet,**
**daß** die Befestigungsmittel (16) durch Schrauben gebildet sind, deren Köpfe (21) in montierter Stellung dem Haltekanal (13) zugewandt sind.

8. Cabriolet-Fahrzeug nach einem der Ansprüche 1 bis 7,
**dadurch gekennzeichnet,**
**daß** der Mittelteil (9) des Spriegels (6;7) im Querschnitt eine im wesentlichen elliptische Form mit einer zumindest nahezu parallel zur Bezugerstreckung (17;18) im Bereich des jeweiligen Spriegels (6;7) erstreckten großen Halbachse (20) aufweist.

9. Cabriolet-Fahrzeug nach einem der Ansprüche 1 bis 8,
**dadurch gekennzeichnet,**
**daß** der Beschlag (10) eine flach erstreckte Form aufweist.

10. Bewegliches Fahrzeugdach (2) für ein Cabriolet-Fahrzeug (1) nach einem der Ansprüche 1 bis 9.

## Claims

1. A cabriolet vehicle (1) with a roof (2) which at least in some areas has a flexible roof cover (4) which is engaged from below by one or more bow(s) (6; 7) situated transverse to the direction of travel (F), wherein at least one bow (6; 7) is formed of more than one part and includes a middle area (9) connected to lateral mountings (10),
**characterised in that**
in order to connect the middle part (9) and the mountings (10), there are provided fastening means (16) which, when the roof (2) is closed, are situated at least almost parallel to the plane of extension (17; 18) of the outer roof cover (4) in the area of the respective bow (6; 7).

2. The cabriolet vehicle (1) according to Claim 1,
**characterised in that**
the mountings (10) engage the middle part (9) in a form-fitting manner and the fastening means (16) pass through both parts (9; 10).

3. The cabriolet vehicle (1) according to one of claims 1 or 2,
**characterised in that**
the middle part (9) has a retaining channel (13), which follows its course, for a thickened welt (14) or a similar edge area of a cover fastening (15).

4. The cabriolet vehicle (1) according to Claim 3,
**characterised in that**
the fastening means (16) can be inserted through the retaining channel (13) and, in the mounted position, are covered by the cover fastening (15).

5. The cabriolet vehicle (1) according to Claim 4,
**characterised in that**
at least one of the mountings (10) has a recessed area (22) of insertion to the retaining channel (13).

6. The cabriolet vehicle according to Claim 5,
**characterised in that**
the area (22) of insertion broadens towards the middle of the vehicle.

7. The cabriolet vehicle according to one of claims 3 to 6,
**characterised in that**
the fastening means (16) are formed by screws of which the heads (21), in the mounted position, face the retaining channel (13).

8. The cabriolet vehicle according to one of claims 1 to 7,
**characterised in that**
the middle part (9) of the bow (6; 7) has in cross-section a substantially elliptical shape with a large semi-major axis (20) extended at least almost parallel to the extension of the cover (17; 18) in the area of the respective bow (6; 7).

9. The cabriolet vehicle according to one of claims 1 to 8,
**characterised in that**
the mounting (10) has a flatly extended shape.

10. A movable vehicle roof (2) for a cabriolet vehicle (1) according to one of claims 1 to 9.

## Revendications

1. Véhicule cabriolet (1) avec un toit (2) présentant au moins partiellement un revêtement de toit (4) flexible sous lequel un ou plusieurs arceau(x) (6 ; 7) disposés transversalement au sens de la marche (F) prenne(nt) prise, au moins un arceau (6 ; 7) étant constitué de plusieurs parties et comprenant une partie centrale (9) reliée aux armatures latérales (10),
**caractérisé en ce que,**
des moyens de fixation (16) sont prévus pour le raccord de la partie centrale (9) et des armatures (10) et qui, lorsque le toit (2) est fermé, sont au moins presque parallèles au plan d'extension (17 ; 18) du revêtement de toit extérieur (4) dans la zone de l'arceau correspondant (6 ; 7).

2. Véhicule cabriolet (1) selon la revendication 1
**caractérisé en ce que,**
les armatures (10) s'engagent par conjugaison de forme dans la partie centrale (9) et **en ce que** les moyens de fixation (16) traversent les deux parties (9 ; 10).

3. Véhicule cabriolet (1) selon l'une des revendications 1 ou 2,
**caractérisé en ce que,**
la partie centrale (9) présente un conduit de maintien (13) suivant le tracé de cette dernière pour un bourrelet épaissi (14) ou une zone marginale similaire d'une fixation de revêtement (15).

4. Véhicule cabriolet (1) selon la revendication 3,
**caractérisé en ce que,**
les moyens de fixation (16) peuvent être introduits à travers le conduit de maintien (13) et, en position de montage, sont recouverts par la fixation de revêtement (15).

5. Véhicule cabriolet (1) selon la revendication 4,
**caractérisé en ce que,**
au moins l'une des armatures (10) présente une zone d'introduction évidée (22) pour le conduit de maintien (13).

6. Véhicule cabriolet selon la revendication 5,
**caractérisé en ce que,**
la zone d'introduction (22) s'étend vers le centre du véhicule.

7. Véhicule cabriolet selon l'une des revendications 3 à 6,
**caractérisé en ce que,**
les moyens de fixation (16) sont formés par des vis dont les têtes (21), en position de montage, sont tournées vers le conduit de maintien (13).

8. Véhicule cabriolet selon l'une des revendications 1 à 7,
**caractérisé en ce que,**
la partie centrale (9) de l'arceau (6 ; 7) présente en coupe transversale une forme substantiellement elliptique avec un grand demi-axe (20) s'étendant au moins presque parallèlement à l'extension du revêtement (17 ; 18) dans la zone de l'arceau correspondant (6 ; 7).

9. Véhicule cabriolet selon l'une des revendications 1 bis 8,
**caractérisé en ce que,**
l'armature (10) présente une forme s'étendant à plat.

10. Toit mobile de voiture (2) pour un véhicule cabriolet (1) selon l'une des revendications 1 à 9.
